# EUROPÄISCHE PATENTSCHRIFT

(11) **EP 1 802 477 B1**
(45) Veröffentlichungstag und Bekanntmachung des Hinweises auf die Patenterteilung: **27.08.2008**
(21) Anmeldenummer: 05767958.1
(22) Anmeldetag: 15.07.2005
(51) Int. Cl.: B60W 30/18, B60W 10/10, B60W 10/18

(54) **EINLEGEN EINES ANFAHRGANGS BEI EINEM AUTOMATISIERTEN SYNCHRONGETRIEBE**
PLACING AN AUTOMATIC SYNCHRONIZED TRANSMISSION INTO A STARTING SPEED
MISE EN PLACE D'UNE VITESSE DE DEMARRAGE DANS UNE BOITE DE VITESSE AUTOMATIQUE SYNCHRONISEE

(30) Priorität: 22.09.2004 DE 102004045829
(43) Veröffentlichungstag der Anmeldung: 04.07.2007
(73) Patentinhaber: ZF FRIEDRICHSHAFEN Aktiengesellschaft, 88038 Friedrichshafen (DE)
(72) Erfinder: EBNER, Otto, 88048 Friedrichshafen (DE); JÄGER, Thomas, 88074 Meckenbeuren (DE); SCHNEIDER, Florian, 88161 Lindenberg (DE)
(74) Vertreter: Zietlow, Karl-Peter
(86) Internationale Anmeldenummer: PCT/EP2005/007697
(87) Internationale Veröffentlichungsnummer: WO 2006/032318

(56) Entgegenhaltungen:
- EP-A- 0 276 609
- WO-A-03/097401
- DE-A1- 10 242 823

## Beschreibung

Die Erfindung betrifft ein Verfahren und eine Vorrichtung zum Betreiben eines automatisierten Synchrongetriebes in Vorgelegebauweise gemäß dem Oberbegriff des Patentanspruchs 1 beziehungsweise des Patentanspruchs 10.

Automatisierte Synchrongetriebe in Vorlegebauweise werden seit geraumer Zeit in unterschiedlichen Kraftfahrzeugtypen genutzt. Beispielhaft zeigt die DE 102 42 823 A1 ein automatisiertes Schaltgetriebe in Vorgelegebauweise, bei dem eine Eingangswelle und eine Ausgangswelle koaxial sowie parallel zu einer Vorgelegewelle angeordnet sind. Das Antriebsdrehmoment der Eingangswelle ist wahlweise über ein Festzahnradpaar auf der Eingangswelle und der Vorgelegewelle sowie über gangspezifische Losrad-Festradpaarungen von der Vorgelegewelle auf die Ausgangswelle übertragbar, oder durch eine direkte mechanische Kopplung von Eingangswelle und Ausgangswelle auf letztere leitbar.

Dieses bekannte Getriebe verfügt zudem über Koppeleinrichtungen, mit denen zur Durchführung eines konkreten Getriebeschaltvorgangs die Losräder mit der Ausgangswelle antriebstechnisch verbindbar sind. Zur Synchronisierung der Drehzahlen ist zudem eine Getriebebremse vorhanden, mit der Getriebezahnräder zur Durchführung von Hochschaltvorgängen abbremsbar sind. Diese Getriebebremse ist zur Reduzierung der Herstellkosten sowie zur Bauraumoptimierung an einer der Gesamtheit der Koppelvorrichtungen des Getriebes ausgebildet, während die anderen Koppelvorrichtungen frei von Brems-oder Synchronisationsvorrichtungen sind.

Nachteilig an diesem automatisierten Synchrongetriebe ist, dass beim Einlegen eines Anfahrgangs bei Stillstand oder kleinen Geschwindigkeiten eine unerwünschte Beschleunigung erfolgen kann. Dies ist dann der Fall, wenn vor dem Einlegen des Gangs die Anfahrkupplung geschlossen war und das Fahrzeug nicht gegen unerwünschte Bewegungen gesichert ist. Der Grund hierfür liegt darin, dass die Drehzahl der Vorgelegewelle auf eine Drehzahl nahe Null (Fahrzeug steht, somit steht auch der Getriebeabtrieb still) abgebremst werden muss, um einen Anfahrgang einlegen zu können. Hierzu wird dann die kinetische Energie der Vorgelegewelle über das Getriebe abgebaut. Dies hat allerdings zur Folge, dass ein Teil der kinetischen Energie der Vorgelegewelle zur Beschleunigung des Getriebeabtriebs führt. Dadurch tritt eine unerwünschte Fahrzeugbeschleunigung auf.

Vor diesem Hintergrund liegt der Erfindung die Aufgabe zugrunde, ein Verfahren und eine Vorrichtung zum Betreiben eines automatisierten Synchrongetriebes in Vorgelegebauweise vorzustellen, bei dem bei Stillstand des Kraftfahrzeugs und beim Einlegen eines Anfahrgangs keine unerwünschte Fahrzeugbeschleunigung auftritt.

Die Lösung dieser Aufgabe ergibt sich aus den Merkmalen der Patentansprüche 1 und 10, während vorteilhafte Ausgestaltungen und Weiterbildungen der Erfindung den Unteransprüchen entnehmbar sind.

Der Erfindung liegt die Erkenntnis zugrunde, dass sich eine unerwünschte Fahrzeugbeschleunigung beim Einlegen des Anfahrgangs bei Fahrzeugstillstand unterdrücken lässt, wenn beim Stillstand des Kraftfahrzeugs und beim Einlegen eines Anfahrgangs ein Drehmoment der Vorgelegewelle nicht antriebswirksam abgebaut wird.

Besonders bevorzugt wird dabei so vorgegangen, dass Aktuatoren im Antriebsstrang des Fahrzeuges, also vom Getriebe bis zu den Fahrzeugantriebsrädem, dann zum nicht antriebswirksamen Abbau eines Drehmomentes an der Vorgelegewelle betätigt werden, wenn das Ist-Drehmoment der Vorgelegewelle größer als ein vorbestimmtes Grenz-Drehmoment ist, ab dem ohne Aktuatorbetätigung eine Beschleunigung des Fahrzeugs festzustellen wäre.

Beispielsweise erfolgt der Abbau des Drehmoments der Vorgelegewelle durch Einwirkung einer Bremssteuerungsvorrichtung auf Bremsaktuatoren an den Antriebsrädern des Kraftfahrzeugs, indem diese zum Zeitpunkt des Einlegens des Anfahrgangs in Schließrichtung betätigt werden, und dann in Öffnungsrichtung betätigt werden, wenn das Ist-Drehmoment der Vorgelegewelle unter den Wert des Grenz-Drehmoments abgebaut ist. Dabei wirken derartige Aktuatoren vorzugsweise auf Vorrichtungen, die beispielsweise über Reibarbeit ein solches Antriebsdrehmoment abbauen können.

Vorteilhaft bei diesem Verfahren ist, dass auf bereits vorhandene Einrichtungen des Kraftfahrzeugs, wie z.B. eine Bremssteuerungsvorrichtung, eine Betriebsbremse und/oder eine Feststellbremse zurückgegriffen werden kann, sowie lediglich durch zusätzliche Modifikation eine unerwünschte Fahrzeugbeschleunigung beim Einlegen des Anfahrgangs unterdrückt wird. Diese zusätzliche Modifikation kann über Hardware- oder Softwarelösungen realisiert werden.

In einer weiteren vorteilhaften Ausgestaltung der Erfindung wird das Drehmoment der Vorgelegewelle mittels einer zweiten Synchronisiervorrichtung bremsend abgebaut. Vorzugsweise stellt dabei diese zweite Synchronisiervorrichtung eine Synchronisierung mittels eines Gangs bereit, welcher eine kleinere Übersetzung als die des Anfahrgangs hat. Somit wird gemäß dieser Verfahrensvariante das Drehmoment der Vorgelegewelle über eine Synchronisierung eines Gangs mit kleinerer Übersetzung (n_{Antrieb}/n_{Abtrieb}) als der des Anfahrgangs abgebaut. Erst wenn die Vorgelegewelle nahezu still steht, wird der eigentliche Anfahrgang eingelegt. Dadurch wird erreicht, dass das auf den Abtrieb wirkende Drehmoment aufgrund der kleineren Übersetzung geringer ist als beim Synchronisieren des Anfahrgangs. In diesem Fall reicht das durch den Synchronisiervorgang erzeugte Drehmoment vorteilhafter Weise nicht dazu aus, das im Stillstand befindliche Fahrzeug zu bewegen, da physikalische Größen wie unter anderem Haftreibung und die Trägheitsmasse des Kraftfahrzeugs einer solchen Bewegung entgegentreten. Infolge dessen tritt keine unerwünschte Fahrzeugbeschleunigung auf. Vorzugsweise wird der Gang mit kleinerer Übersetzung als der des Anfahrgangs durch eine weitere einschaltbare Zahnradstufe bereitgestellt.

In einer weiteren vorteilhaften Ausgestaltung wird beim Einlegen des Anfahrgangs die Synchronisierung der ersten Synchronisiervorrichtung mit einer Kraft beaufschlagt, welche derart gewählt wird, dass ein durch den Synchronisiervorgang erzeugtes Drehmoment auf die Antriebsräder des Fahrzeugs derart gering ist, dass dieses im Stillstand verbleibt.

Vorzugsweise wird die Kraft dabei in Abhängigkeit von der Haftreibung der Antriebsräder des Kraftfahrzeugs an der Fahrbahnoberfläche und/oder der Trägheitsmasse des Kraftfahrzeugs und/oder der Längsneigung des Kraftfahrzeugs gewählt.

Somit wird beim Einlegen des Anfahrgangs die Synchronisierung mit einer nur geringen, jedoch betriebssituationsgerechten Kraft beaufschlagt. Das am Getriebeabtrieb auftretende Drehmoment ist unter anderem abhängig von der Kraft, mit welcher die Synchronisierung beaufschlagt wird. Die Kraft wird demnach so gewählt, dass das durch den Synchronisiervorgang erzeugte Drehmoment nicht ausreicht, um das im Stillstand befindliche Fahrzeug zu bewegen, da physikalische Größen, wie unter anderem die Haftreibung und die Trägheitsmasse des Kraftfahrzeugs, einer solchen Bewegung entgegenwirken. Infolge dessen tritt keine unerwünschte Fahrzeugbeschleunigung auf.

Vorteilhafterweise kann die Längsneigung des Fahrzeugs durch einen Neigungssensor ermittelt werden, welcher beispielsweise in einem Airbag-Auslösesystem zum Auslösen eines Airbags enthalten ist. Alternativ dazu kann auch ein separater Neigungssensor bereitgestellt sein.

Gemäß den Merkmalen des unabhängigen Vorrichtungsanspruchs 10 ist eine Vorrichtung zur Durchführung des genannten Verfahrens gekennzeichnet durch eine Bremssteuerungsvorrichtung, die über Sensorleitungen mit einem Drehmomentsensor an einer Vorgelegewelle des Synchrongetriebes sowie mit einem Sensor zur Ermittlung der Geschwindigkeit des Kraftfahrzeugs verbundenen ist, die über Steuerleitungen mit Aktuatoren zum nicht antriebswirksamen Abbau eines Drehmomentes an der Vorgelegewelle verbunden ist, und die derartig ausgebildet ist, dass diese beim Stillstand des Kraftfahrzeugs und beim Einlegen eines Anfahrgangs des Synchrongetriebes mittels der Bremssteuerungsvorrichtung dann ein Signal an die Aktuatoren übertragen kann, wenn das Ist-Drehmoment an der Vorgelegewelle des Synchrongetriebes größer als ein vorbestimmtes Grenzdrehmoment ist.

Das Signal hinsichtlich des Einlegens des Anfahrgangs kann der Bremssteuerungsvorrichtung vorteilhaft von einem Getriebesteuerungsgerät zugeleitet werden. Es ist aber auch möglich, dass die Bremssteuerungsvorrichtung in ein Getriebesteuerungsgerät integriert ist.

Die Aktuatoren sind beispielsweise als Bremsaktuatoren einer Betriebsbremse und/oder einer Feststellbremse des Kraftfahrzeugs ausgebildet.

Es ist aber auch praktikabel, wenn ein Aktuator zur Betätigung einer zweiten Synchronisiervorrichtung bremswirksam vorhanden ist. Die zweite Synchronisiervorrichtung ist zudem vorzugsweise an einem Gangzahnradpaar angeordnet, welche eine kleinere Übersetzung als die des Anfahrgangs bildet.

Bei der Nutzung dieser Vorrichtung erweist es sich als vorteilhaft, dass beim Einlegen eines Anfahrgangs bei Stillstand oder nahezu im Stillstand des Kraftfahrzeugs keine unerwünschte Fahrzeugbeschleunigung auftritt, die von einem Restdrehmoment der Vorgelegewelle herrühren kann.

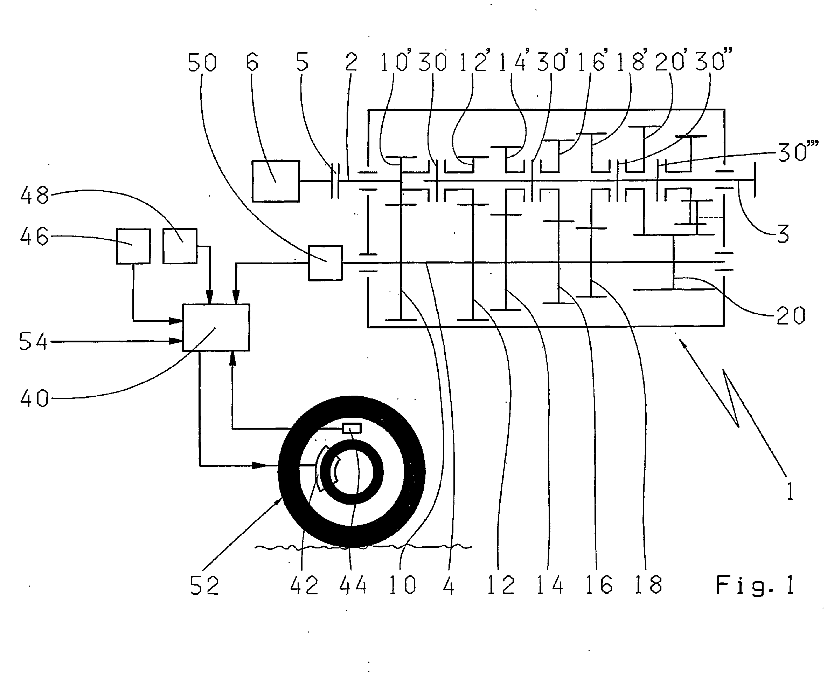

Die Erfindung lässt sich anhand eines Ausführungsbeispiels weiter erläutern. Dazu ist der Beschreibung eine Zeichnung beigefügt. Diese zeigt in der einzigen Figur ein Getriebeschema eines automatisierten Synchrongetriebes in Vorgelegebauweise.

Bei diesem Synchrongetriebe 1 sind eine Eingangswelle 2 und eine dazu koaxiale Ausgangswelle 3 parallel zu einer Vorgelegewelle 4 angeordnet. Die Eingangswelle 2 ist über eine Kupplung 5 mit einer Antriebsmaschine 6 des Kraftfahrzeugs verbindbar. Auf der Vorgelegewelle 4 sitzen drehfest und axial unverschiebbar Vorgelegewellenzahnräder 10,12, 14,16,18 und 20, welche jeweils mit einem Hauptwellenzahnrad 10',12',14',16',18' und 20' kämmen, wobei alle Hauptwellenzahnräder als Losräder ausgebildet sind. Zwischen den Losrädern befinden sich auf der Getriebeausgangswelle 2 Synchronisationseinrichtungen 30, 30', 30" und 30"', zu denen doppelseitig wirksame Schiebemuffen und einseitig wirksame Schiebemuffen gehören, die drehfest sowie axial verschiebbar auf der Getriebeausgangswelle 2 angeordnet sind. Während eines Gangschaltvorganges wird die jeweilige Schiebemuffe mit Hilfe einer nicht dargestellten Betätigungsvorrichtung axial verschoben.

Um beim Einlegen eines Anfahrgangs bei Fahrzeugstillstand oder kleinen Geschwindigkeiten eine unerwünschte Fahrzeugbeschleunigung zu unterdrücken, muss das eventuell vorhandene Restdrehmoment der Vorgelegewelle 4 zuvor abgebaut werden. Dieser Abbau des Drehmoments der Vorgelegewelle 4 wird in dieser Erfindungsvariante indirekt durch Einwirken einer vorzugsweise elektronischen Bremssteuerungsvorrichtung 40 abgebaut.

Bei der gezeigten Ausführungsform ist die Bremssteuerungsvorrichtung 40 mit einer herkömmlichen Betriebsbremse 42 über Steuerungsleitungen verbunden. Ferner kann die Bremssteuerungsvorrichtung 40 mit einer Feststellbremse (nicht gezeigt) auf gleiche Art signaltechnisch verbunden sein. Des weiteren ist die Bremssteuerungsvorrichtung 40 mit Messsensoren 44, 46, 48 und 50 zum Aufnehmen von Fahrzeugzustandsdaten über Sensorleitungen verbunden.

Zu den Messsensoren zählt in dieser Ausführungsform ein Antriebsrad-Drehgeschwindigkeits-Sensor 44 zum Aufnehmen einer Drehgeschwindigkeit eines Antriebsrads 52. Aus dieser Drehgeschwindigkeit bzw. Drehzahl des Antriebsrades 52 lässt sich bei Kenntnis dessen Abrolldurchmessers problemlos die Fahrgeschwindigkeit des Fahrzeugs errechnen. Ferner ist ein Neigungssensor 46 zum Erfassen der aktuellen Längsneigung des Kraftfahrzeugs vorhanden. Des weiteren ist ein Haftreibungssensor 48 vorhanden, welcher unter Zuhilfenahme physikalischer Kraftfahrzeugsdaten eine aktuelle Haftreibung von Fahrzeugantriebsrädern an der Straßenoberfläche bestimmt. Schließlich ist ein Drehmomentsensor 50 vorgesehen, welcher das Drehmoment der Vorgelegewelle 4 bestimmt. Zudem wird der Bremssteuerungsvorrichtung 40 ein Signal 54 zugeleitet, wenn das Einlegen des Anfahrgangs erfolgt.

Mittels der Ausgangsdaten des Antriebsrad-Drehgeschwindigkeits-Sensors 44 bestimmt die Bremssteuerungsvorrichtung 40, ob das Kraftfahrzeug im Stillstand oder nahezu Stillstand ist oder nicht. Mit Hilfe der Ausgangsdaten des Drehmomentsensors 50 bestimmt die Bremssteuerungsvorrichtung 40, ob das aktuelle Drehmoment der Vorgelegewelle 4 einen zuvor festgelegten Grenz-Drehmomentwert übersteigt oder nicht. Die Ausgangsdaten des Neigungssensors 46 und des Haftreibungssensors 48 dienen zum Bestimmen eines auf die Antriebsräder 52 angelegten Drehmoments, welches ausreichen würde, um das Fahrzeug unerwünscht zu beschleunigen. Dann, wenn die Bremssteuerungsvorrichtung 40 anhand der Eingangsdaten der Sensoren 44, 46, 48 und 50 und des Signals 54 bestimmt, dass das Kraftfahrzeug im Stillstand oder nahezu Stillstand ist, dass ein Anfahrgang eingelegt wird und dass an der Vorgelegewelle 4 ein Drehmoment vorliegt, welches größer als das Grenz-Drehmoment ist, welches das Kraftfahrzeug in eine unerwünschte Fahrzeugbeschleunigung versetzen würde, wirkt die Bremssteuerungsvorrichtung 40 auf die Betriebsbremse 42 derart ein, dass deren Bremselemente eine genügend große Reibung auf die Antriebsräder 52 ausüben, welche eine unerwünschte Beschleunigung des Kraftfahrzeugs ausschließt. Ist die Vorgelegewelle hinsichtlich ihres Ist-Drehmoments unterhalb des Grenz-Drehmoments abgebremst bzw. der Synchronisiervorgang des Synchrongetriebes 1 abgeschlossen, so wird die Betriebsbremse 42 wieder gelöst.

Beim Einlegen des Anfahrgangs wirkt demnach die Bremssteuerungsvorrichtung 40 kurzzeitig auf die Betriebsbremse 42 des Kraftfahrzeugs ein, so dass jegliche unerwünschte Fahrzeugbewegung unterdrückt wird. Somit kann ohne Zuhilfenahme zusätzlicher Bauteile ein eventuell vorliegendes Restdrehmoment der Vorgelegewelle 4 schnell und einfach abgebaut werden. Nachdem das Drehmoment der Vorgelegewelle 4 abgebaut oder nahezu abgebaut ist, wird die Einwirkung durch die Bremssteuerungsvorrichtung 40 wieder beendet.

### Bezugszeichen

- 1: Synchrongetriebe
- 2: Eingangswelle
- 3: Ausgangswelle
- 4: Vorgelegewelle
- 5: Kupplung
- 6: Maschine
- 10,12,14, 16,18, 20: Vorgelegewellenzahnräder, Festräder
- 10', 12', 14', 16', 18', 20': Hauptwellenzahnräder, Losräder
- 30, 30', 30",: Synchronisationseinrichtungen
- 40: Bremssteuerungsvorrichtung
- 42: Betriebsbremse
- 44: Antriebsrad-Drehgeschwindigkeits-Sensor
- 46: Neigungssensor
- 48: Haftreibungssensor
- 50: Drehmomentsensor
- 52: Antriebsrad
- 54: Signal Anfahrgang einlegen

## Patentansprüche

1. Verfahren zum Betreiben eines automatisierten Synchrongetriebes (1) in Vorgelegebauweise für Kraftfahrzeuge, mit einer zu einer Eingangswelle (2) und einer Ausgangswelle (3) parallel angeordneten Vorgelegewelle (4), bei dem die Eingangswelle (2) und die Ausgangswelle (3) mit der Vorgelegewelle (4) über Zahnradpaare antriebswirksam miteinander in Verbindung stehen bzw. miteinander verbindbar sind, und bei dem wenigstens eine Koppel- und Synchronisationsvorrichtung (30, 30', 30", 30'") für wenigstens ein Losrad (10', 12', 14', 16', 18', 20') des Getriebes (1) vorhanden ist, mit deren Hilfe das wenigstens eine Losrad mit einer Getriebewelle (3) drehfest verbindbar ist, **dadurch gekennzeichnet, dass** beim Stillstand des Kraftfahrzeugs und Einlegen eines Anfahrgangs durch eine bremsende Vorrichtung ein Drehmoment der Vorgelegewelle (4) nicht antriebswirksam abgebaut wird.

2. Verfahren nach Anspruch 1, **dadurch gekennzeichnet, dass** Aktuatoren im Antriebsstrang des Fahrzeuges dann zum nicht antriebs- wirksamen Abbau eines Drehmomentes an der Vorgelegewelle (4) betätigt werden, wenn das Ist-Drehmoment der Vorgelegewelle (4) größer als ein vor-bestimmtes Grenz-Drehmoment ist, ab dem ohne Aktuatorbetätigung beim Einlegen des Anfahrgangs eine Beschleunigung des Fahrzeugs festzustellen wäre.

3. Verfahren nach Anspruch 1 oder 2, **dadurch gekennzeichnet , dass** der Abbau des Drehmoments der Vorgelegewelle (4) durch Ein-wirkung einer Bremssteuerungsvorrichtung (40) auf Bremsaktuatoren an den Antriebsrädern (52) des Kraftfahrzeugs erfolgt, indem diese beim Einlegens des Anfahrgangs in Schließrichtung betätigt werden, und dann in Öffnungsrichtung betätigt werden, wenn das Ist-Drehmoment der Vorgelegewelle (4) unter den Wert des Grenz-Drehmoments abgebaut ist.

4. Verfahren nach Anspruch 3, **dadurch gekennzeichnet, dass** die Bremssteuerungsvorrichtung (40) auf Bremsaktuatoren einer Betriebsbremse (42) und/oder einer Feststellbremse des Kraftfahrzeugs einwirkt.

5. Verfahren nach Anspruch 1 oder 2, **dadurch gekennzeichnet , dass** das Drehmoment der Vorgelegewelle (4) mittels einer zweiten Synchronisiervorrichtung bremsend abgebaut wird.

6. Verfahren nach Anspruch 5, **dadurch gekennzeichnet, dass** die zweite Synchronisiervorrichtung eine Synchronisierung mittels eines, Gangs bereitstellt, welcher eine kleinere Übersetzung als die des Anfahrgangs hat.

7. Verfahren nach Anspruch 6, **dadurch gekennzeichnet, dass** der Gang mit kleinerer Übersetzung als der des Anfahrgangs durch eine weitere einschaltbare Zahnradstufe bereitgestellt wird.

8. Verfahren nach Anspruch 1, **dadurch gekennzeichnet, dass** beim Einlegen des Anfahrgangs die Synchronisierung der ersten Synchronisiervorrichtung mit einer Kraft beaufschlagt wird, welche derart gewählt wird, dass ein durch den Synchronisiervorgang erzeugtes Drehmoment auf die Antriebsräder (52) derart ist, dass das Kraftfahrzeug im Stillstand verbleibt.

9. Verfahren nach Anspruch 8, **dadurch gekennzeichnet, dass** die Kraft in Abhängigkeit von einer Haftreibung der Antriebsrädern (52) des Kraftfahrzeuges und/oder einer Trägheitsmasse des Kraftfahrzeugs und/oder einer Neigung des Kraftfahrzeugs gewählt wird.

10. Vorrichtung zur Durchführung eines Verfahrens gemäß den vorherigen Ansprüchen, **gekennzeichnet durch** eine Bremssteuerungsvorrichtung (40), die über Sensorleitungen mit einem Drehmomentsensor (50) an einher Vorgelegewelle (4) des Synchrongetriebes (1) sowie mit einem Sensor (44) zur Ermittlung der Geschwindigkeit des Kraftfahrzeugs verbundenen ist, der ein Signal (54) über das Einlegen eines Anfahrganges zuleitbar ist, die über Steuerleitungen mit Aktuatoren (42) zum nicht antriebswirksamen Abbau eines Drehmomentes an der Vorgelegewelle (4) verbunden ist, und die derartig ausgebildet ist, dass diese beim Stillstand des Kraftfahrzeugs und beim Einlegen eines Anfahrgangs des Synchrongetriebes (1) mittels der Bremssteuerungsvorrichtung (40) dann ein Signal an die Aktuatoren (42) übertragen kann, wenn das Ist-Drehmoment an der Vorgelegewelle (4) des Synchrongetriebes (1) größer als ein vorbestimmtes Grenz-Drehmoment ist.

11. Vorrichtung nach Anspruch 10, **dadurch gekennzeichnet, dass** die Aktuatoren als Bremsaktuatoren einer Betriebsbremse (42) und/oder einer Feststellbremse des Kraftfahrzeugs ausgebildet sind.

12. Vorrichtung nach Anspruch 11, **dadurch gekennzeichnet, dass** der Aktuator zur Betätigung einer zweiten Synchronisiervorrichtung vorge-sehen ist.

13. Vorrichtung nach Anspruch 10, **dadurch gekennzeichnet, dass** ein Neigungssensor (46) zum Erfassen einer aktuellen Fahrzeuglängsneigung und/oder ein Haftreibungssensor (48) zur Bestimmung der Haftreibung der Fahrzeugräder in bezug zur Fahrbahn vorhanden ist.

## Claims

1. Method for operating an automated countershaft-type synchromesh transmission (1) for motor vehicles, with a countershaft (4) being arranged parallel to an input shaft (2) and an output shaft (3), with the input shaft (2) and the output shaft (3) being drivingly connected or connectable with the countershaft (4) via gear pairs, and with at least one coupling and synchronizing device (30, 30',30", 30") being provided for at least one idler gear (10',12',14',16',18',20, of the tranmission (1), with the aid of which at least one idler gear can be nonrotationally connected to a transmission shaft (3), **characterized in that** upon vehicle shandstill and engagement of a starting gear a torque on the countershaft (4) is reduced to a drive-ineffective level by a decelerating device.

2. Method according to claim 1, **characterized in that** actuators in the vehicle's driveline are not activated for drive-ineffective reduction of a torque on the countershaft (4) if the actual torque on the countershaft (4) exceeds a preset limit torque at which engagement of a starting gear would result in vehicle acceleration if no actuators are activated.

3. Method according to claim 1 or 2, **characterized in that** reduction of the torque on the countershaft (4) is brought about by a brake control device (40) acting on brake actuators on the vehicle's driving wheels (52) in such a way that upon engagement of a starting gear they are shifted in locking direction and then shifted in opening direction when the actual torque on the countershaft (4) has been reduced to a level below the limit torque.

4. Method according to claim 3, **characterized in that** the brake control device (40) acts on brake actuators of a service brake (42) and/or a parking brake of the motor vehicle.

5. Method according to claim 1 or 2, **characterized in that** the torque on the countershaft (4) is reduced by the braking effect of a second synchronizing device.

6. Method according to claim 5, **characterized in that** the second synchronizing device provides synchronization by means of a gear with a smaller ratio than that of the starting gear

7. Method according to claim 6, **characterized in that** the gear with a smaller ratio than that of the starting gear is provided by a further engageable gear stage.

8. Method according to claim 1, **characterized in that** upon engagement of the starting gear the synchronizer of the first synchronizing device is activated by a force which is selected in such a way that a torque generated by the synchronizing process and acting on the driving wheels (52) is such that the motor vehicle remains in standstill.

9. Method according to claim 8, **characterized in that** selection of the force depends on the static friction of the driving wheels (52) of the motor vehicle and/or a moment of inertia of the motor vehicle and/or an inclination of the motor vehicle.

10. Device for the realization of a method according to the preceding claims, **characterized by** a brake control device (40) which via sensor lines is linked to a torque sensor (50) on a countershaft (4) of the synchromesh transmission (1) and also to a sensor (44) for determination of the speed of the motor vehicle, and to which a starting-gear engagement signal (54) can be fed, and which via control lines is linked to actuators (42) for reduction of the torque on the countershaft (4) to a drive-ineffective level, and which is designed in such a way that upon standstill of the motor vehicle and engagement of a starting gear of the synchromesh transmission (1) and that by means of the brake control device (40) a signal can be transmitted to the actuators (42) when the actual torque on the countershaft (4) of the synchromesh transmission (1) exceeds a preset limit torque.

11. Device according to claim 10, **characterized in that** the actuators are designed as brake actuators of a service brake (42) and/or a parking brake of the motor vehicle.

12. Device according to claim 11, **characterized in that** the actuator is provided for acting on a second synchronizing device.

13. Device according to claim 10, **characterized** that a tilt sensor (46) is provided for sensing a current longitudinal vehicle inclination and/or a static friction sensor (48) for determination of the static friction of the vehicle's wheels in relation to the roadway.

## Revendications

1. Procédé d'utilisation d'une boîte de vitesses synchronisée automatisée (1) à arbres intemiédiaires pour véhicules automobiles, dotée dun arbre intermédiaire (4) disposé de façon parallèle par rapport à rarbre d'entrée (2) et rarbre de sortie (3), et sur laquelle rarbre d'entrée (2) et rarbre de sortie (3) sont liés activement ou peuvent être liés par l'intermédiaire de trains d'engrenages à rarbre intermédiaire (4), et sur laquelle est présent au moins un dispositif de couplage et de synchronisation (30, 30', 30", 30") pour au moins un pignon fou (10',12',14',16,18',20') de la boîte de vitesses (1), à raide desquels rau moins un pignon fou peut être lié de façon solidaire en rotation à un arbre de la boîte de vitesses (3), **caractérisé en ce que** à l'arrêt du véhicule automobile et lors de l'engagement d'un rapport de démarrage, grâce à un dispositif de freinage un couple de l'arbre intermédiaire (4) peut être réduit de façon non-active.

2. Procédé selon la revendication 1, **caractérisé en ce que** des actionneurs montés dans la chaîne cinématique du véhicule sont actionnés pour la réduction non-active d'un couple de rarbre intermédiaire (4) au moment où le couple réel de l'arbre intermédiaire (4) est supérieur à un couple limite prédéterminé et à partir duquel on constaterait une accélération du véhicule sans actionnement des actionneurs et lors de rengagement du rapport de démarrage.

3. Procédé selon la revendication 1 ou 2, **caractérisé en ce que** la réduction du couple de l'arbre intermédiaire (4) s'effectue par l'effet exercé par un dispositif de commande du freinage (40) sur les actionneurs de freinage des roues motrices (52) du véhicule automobile, en actionnant ceux-ci lors de l'engagement du rapport de démarrage en sens de fermeture, et en les actionnant en sens d'ouverture dès que le couple réel de l'arbre intermédiaire (4) a diminué en-dessous du seuil du couple-limite.

4. Procédé selon la revendication 3, **caractérisé en ce que** le dispositif de commande du freinage (40) agit sur les actionneurs de freinage d'un frein de service (42) et/ou sur un frein de stationnement du véhicule automobile.

5. Procédé selon la revendication 1 ou 2, **caractérisé en ce que** le couple de l'arbre intermédiaire (4) est réduit par freinage à l'aide d'un deuxième dispositif de synchronisation.

6. Procédé selon la revendication 5, **caractérisé en ce que** le deuxième dispositif de synchronisation réalise une synchronisation à l'aide d'une vitesse ayant un rapport de démultiplication inférieur à celui du rapport de démarrage.

7. Procédé selon la revendication 6, **caractérisé en ce que** la vitesse ayant un rapport de démultiplication inférieur à celui du rapport de démarrage est mis à disposition par un autre étage d'engranages enclencheable.

8. Procédé selon la revendication 1, **caractérisé en ce que** lors de l'enclenchement du rapport de démarrage le synchroniseur du premier dispositif de synchronisation est sollicité avec une force, celle-ci étant choisie de manière à ce que un couple produit par le processus de synchronisation et agissant sur les roues motrices (52) est tel que le véhicule automobile reste à l'arrêt

9. Procédé selon la revendication 8, **caractérisé en ce que** la force est choisie en fonction de l'adhérence des roues motrices (52) du véhicule automobile et/ou de la masse d'inertie du véhicule automobile et/ou d'une inclinaison du véhicule automobile.

10. Dispositif pour la réalisation d'un procédé selon les revendications précédentes, **caractérisé par** un dispositif de commande du freinage (40), celui-ci étant lié par des lignes de capteurs à un capteur de couple (50) positionné sur un arbre intermédiaire (4) de la boîte de vitesses synchronisée (1) ainsi qu'à un capteur (44) pour la détermination de la vitesse du véhicule automobile, auquel peut être envoyé un signal (54) d'enclenchement d'un rapport de démarrage, et le dispositif étant lié par l'intermédiaire de lignes de commande à des actionneurs (42) permettant la réduction non-active d'un couple sur l'arbre intermédiaire (4), et étant réalisé de manière à ce qu'il peut - à l'arrêt du véhicule automobile et lors de l'enclenchement d'un rapport de démarrage de la boîte synchronisée (1)-transmettre à raide du dispositif de commande du freinage (40) un signal aux actionneurs (42) dès que le couple réel de l'arbre intermédiaire (4) de la boîte synchronisée (1) est supérieur à un couple limite prédéterminé.

11. Dispositif selon la revendication 10, **caractérisé en ce que** les actionneurs sont réalisés comme actionneurs de freinage d'un frein de service (42) et/ou d'un frein de stationnement du véhicule automobile.

12. Dispositif selon la revendication 11, **caractérisé en ce que** l'actionneur est prévu pour l'actionnement d'un deuxième dispositif de synchronisation.

13. Dispositif selon la revendication 10, **caractérisé en ce que** est présent un capteur d'inclinaison (46) pour l'enregistrement d'une inclinaison longitudinale actuelle et/ou un capteur d'adhérence (48) pour la détermination du frottement statique des roues motrices par rapport à la chaussée.
